# EUROPÄISCHE PATENTSCHRIFT

(11) **EP 2 570 178 B1**
(45) Veröffentlichungstag und Bekanntmachung des Hinweises auf die Patenterteilung: **05.04.2017**
(21) Anmeldenummer: 12405103.8
(22) Anmeldetag: 19.09.2012
(51) Int. Cl.: B01D 53/86, B01D 53/94, B01F 5/04, B01F 5/06, F01N 3/20, B01F 3/04, F01N 1/08

(54) **MISCHEINRICHTUNG**
MIXING DEVICE
DISPOSITIF DE MÉLANGE

(30) Priorität: 19.09.2011 CH 15522011
(43) Veröffentlichungstag der Anmeldung: 20.03.2013
(73) Patentinhaber: Hug Engineering AG, 8352 Elsau (CH)
(72) Erfinder: Hug, Hans Thomas, 8484 Weisslingen (AT)
(74) Vertreter: Hoeger, Stellrecht & Partner Patentanwälte mbB

(56) Entgegenhaltungen:
- EP-A1- 0 558 452
- EP-A1- 2 233 709
- WO-A1-2007/110575
- JP-A- 2006 009 608
- US-A1- 2003 053 944
- US-A1- 2009 229 254
- US-A1- 2010 139 258

## Beschreibung

### Technisches Gebiet

Die Erfindung betrifft eine Mischeinrichtung zur Verwendung bei der katalytischen Entfernung von Stickoxiden (NOₓ) aus einem Abgasstrom sowie eine Vorrichtung, bestehend aus einer Mischeinrichtung und einem Reaktor, wobei in der Mischeinrichtung ein gasförmiges oder flüssiges Reaktionsmittel im Abgasstrom homogen verteilt wird, und der Abgasstrom danach durch einen Reaktor zur selektiven katalytischen Reduktion von Stickoxiden nach dem SCR-Verfahren geführt wird.

### Stand der Technik

In der Verfahrenstechnik werden seit vielen Jahren statische Mischer zur Mischung von Gasen oder Flüssigkeiten eingesetzt. Statische Mischer sind Einbauten in Rohre, die einen Strömungsabriss verursachen und dadurch intensive Verwirbelungen und Querströmungen erzeugen. Durch diese Einbauten reduziert sich die notwendige Mischstrecke. Eine Übersicht zu statischen Mischern wird z. B. im Buch "Mischen und Rühren" Wiley-VCH Verlag, 2003 gegeben. Bei der Vermischung in Gasströmen werden die Mischelemente abstandsweise eingesetzt.

Solche statischen Mischer werden auch vielfach zur Vermischung von Abgasströmen mit gasförmigen oder flüssigen Reaktionsmitteln vor einem SCR-Katalysator, an dem unter Zugabe einer reaktiven Spezies eine selektive katalytische Reduktion von Stickoxiden (NOₓ) stattfindet, eingesetzt. Dabei kann das Abgas aus einem industriellen Prozess, einem Heizkessel oder aus einer motorischen Quelle stammen.

Die reaktive Spezies beim SCR-Verfahren ist Ammoniak (NH₃). Dieses kann direkt als Gas eingesetzt werden. Es ist aber auch möglich, eine flüssige Lösung von NH₃ oder Harnstoff (CO(NH₂)₂) in Wasser (HWL: Harnstoff-Wasser-Lösung; AdBlue: 32.5%-ige Harnstofflösung in demineralisiertem Wasser) als Reaktionsmittel zu verwenden. Im heissen Abgas entsteht aus dem Harnstoff durch eine Hydrolysereaktion ebenfalls die reaktive Spezies NH₃. Die Stickoxide werden mit dem Reduktionsmittel NH₃ in Anwesenheit von Sauerstoff an der Oberfläche des Katalysators zu Stickstoff und Wasser umgewandelt.

Um hohe NOₓ-Minderungsraten zu erzielen, ist es wichtig, das Reaktionsmittel im richtigen Verhältnis zu den Stickoxiden im Abgas zu dosieren. Da SCR-Katalysatoren bis zu einer gewissen Grenze NH₃ speichern können, muss die Dosierung im Mittel der NOₓ-Emission entsprechen. Bei zu kleinen Anteilen an NH₃ werden die Stickoxide nur partiell entfernt. Wird zu viel Reaktionsmittel eingesetzt, so kann das daraus gebildete Ammoniak nicht mit NOₓ reagieren und in die Umgebung gelangen (Ammoniak-Schlupf). Um dies zu verhindern, kann ein Oxidationskatalysator nachgeschaltet werden, der das überschüssige NH₃ wieder in Stickstoff und Wasser umwandelt. Auch durch eine grössere Auslegung des Katalysators kann der Ammoniak-Schlupf minimiert werden, da der Katalysator dann eine bedingte Speicherfunktion aufweist.

Viel wirksamer kann ein Ammoniakschlupf aber dadurch verhindert werden, dass eine praktisch homogene Vermischung des Reaktionsmittels mit dem Abgas stattfindet. Dazu sind je nach Typ des Mischelementes 5 - 10 Rohrdurchmesser notwendig. Bei SCR-Reaktoren für motorische Abgase wird heute überwiegend HWL in den heissen Abgasstrom (üblicherweise 150 - 600 °C) vor dem Katalysator direkt eingespritzt. Problematisch dabei ist, dass das Reaktionsmittel innerhalb der Mischstrecke verdampft und zu NH₃ zersetzt werden muss. Dabei kommt es unter gewissen Bedingungen zu festen, unlöslichen Ablagerungen auf festen Oberflächen. Diese wachsen an und können in kurzer Zeit die Mischstrecke oder weitere Einbauten verstopfen. Zur Vermeidung dieser Ablagerungen muss die Flüssigkeit fein zerstäubt werden. Die Flüssigkeitströpfchen müssen dann ausreichend verdampft und mit dem Abgas vermischt sein, bevor sie auf eine Oberfläche treffen. Die Flüssigkeitsmenge, die noch auf eine heisse Oberfläche trifft, darf eine kritische Menge pro Fläche nicht überschreiten.

Es sind gewisse Grenzen (abhängig von Temperatur, Menge und Zerstäubung) für die Verweilzeit des HWL-Sprays bis zum Auftreffen auf eine Oberfläche und für die gesamte Verweilzeit für Mischung und Zersetzung (Hydrolyse) einzuhalten. Die Flüssigkeitsbelastung in kg pro kg Abgasmenge darf gewisse Grenzen nicht überschreiten. In den meisten Anwendungen liegt die Flüssigkeitsbelastung unter 0.005 kg/kg. Die Verwendung der statischen Mischer oder anderer Einbauten wie z. B. eines Hydrolyse-Katalysators ist deshalb nicht einfach und nur mit ausreichendem Abstand von der Eindüsstelle möglich. Das verlängert die Mischstrecke gegenüber der reinen Gasmischung erheblich. Ein weiterer kritischer Punkt beim Einsatz und der Integration statischer Rohrmischer in die Anlage ist deren Empfindlichkeit auf die Anströmbedingungen. Dies erfordert je nach Situation zusätzliche Rohrlängen oder zusätzliche Massnahmen (Strömungsgleichrichter etc.) zur Erzielung einer gleichmässigen Anströmung. Zur HWL-Eindüsung werden reine Druckzerstäuber oder Zweistoffdüsen mit Druckluft oder Dampf als Treibmedium eingesetzt. Eine Reaktoranlage mit HWL-Dosierung, Rohrmischer und SCR-Reaktor nach der bekannten Ausführung wird in der Druckschrift "combikat - Abgasreinigung für stationäre Motoren" der Firma Hug Engineering AG in Elsau, Schweiz dargestellt. Bei der Abgasreinigung von motorischen Abgasen sind im Abgasstrang oft mehrere Reaktoren angeordnet. So sind z. B. neben dem Bereich für die SCR-Reduktion zur Minderung der Stickoxide auch Reaktoren zur Oxidation von Kohlenmonoxid und Kohlenwasserstoffen (OXI) sowie katalytische Russpartikelfilter (Dieselpartikelfilter, DPF) vorgesehen. Die weiteren Reaktoren weisen einen gleichen oder ähnlichen Querschnitt (bzw. Durchmesser) wie der SCR-Katalysator auf. Die Reihenfolge, in welcher ein Abgas diese Reaktoren passiert, kann der Beschaffenheit des Gases angepasst werden.

Die WO 2007/110575 A1 offenbart eine Mischvorrichtung zum Verteilen eines Reaktionsmittels im Abgasstrom. Das Abgas durchströmt innerhalb der Mischvorrichtung drei konzentrisch aufgebaute Abschnitte und wird zwei Mal umgelenkt. An den Übergängen zwischen den Abschnitten sind Lochbleche zur Erzeugung von Wirbeln vorgesehen. Die Lochbleche sind relativ lang, so dass die einzelnen Abschnitte stark verkürzt sind.

In der US 2009/0229254 A1 ist ebenfalls eine konzentrische Mischvorrichtung beschrieben, die von innen nach aussen durchströmt wird, Diese Mischvorrichtung weist zentrale, bevorzugt konische Einbauten im inneren Teilkanal auf. Somit ist jeder Teilkanal im Querschnitt als Kreisring geformt, der zentrale Bereich der Mischeinrichtung wird nicht genutzt.

Aus der EP 0 558 452 A1 ist eine Vorrichtung bekannt, die einen Pyrolisationskanal, einen Mischkanal und einen Reaktionskanal umfasst. Die drei Kanäle sind exzentrisch aufgebaut, zur Durchmischung stehen jedoch nur die ersten beiden Kanäle zur Verfügung, da sich im dritten Kanal bereits Reduktionskatalysatoren befinden. Die Durchmischung findet insbesondere im Mischkanal statt, der mehrere Kreuzstrommischer aufweist.

### Darstellung der Erfindung

Aufgabe der Erfindung ist es, eine dem eingangs genannten technischen Gebiet zugehörende Vorrichtung zu schaffen, die eine Mischeinrichtung enthält, mit der ein

Reaktionsmittel mit dem Abgasstrom effizient vermischt werden kann und die kompakt ist und so einfach baulich integrierbar ist.

Die Lösung der Aufgabe ist durch die Merkmale des Anspruchs 1 definiert. Gemäss der Erfindung wird eine Mischeinrichtung zur Verwendung bei der katalytischen Entfernung von Stickoxiden aus einem Abgasstrom bereitgestellt. In der Mischeinrichtung werden ein gasförmiges oder flüssiges Reaktionsmittel und die zu reinigenden Abgase homogen miteinander vermischt. Die Mischeinrichtung ist in Strömungsrichtung der Abgase vor einem Reaktor zur katalytischen Entfernung von Stickoxiden nach dem SCR-Verfahren angeordnet. Der Abgasstrom wird nach Durchströmen der Mischeinrichtung dem SCR-Reaktor zugeführt. Dabei ist die Mischeinrichtung ein bauliches Element, das die Mischstrecke umfasst. Die Mischeinrichtung ist derart ausgebildet, dass der Abgasstrom innerhalb der Mischeinrichtung mindestens zweimal um jeweils 180° an einer Strömungsabrisskante umgelenkt wird.

Unter einer Mischstrecke wird im Folgenden ein Bereich verstanden, in dem sich zwei Substanzen, die getrennt in die Mischeinrichtung gelangen, durch strömungsmässige Relativbewegungen weitestgehend homogen miteinander vermischen. Im vorliegenden Fall wird ein Reaktionsmittel in einen Abgasstrahl gesprüht.

Strömen beide Substanzen nun gemeinsam weiter durch eine übliche Mischeinrichtung, die z. B. als gerades Rohr ausgebildet ist, so verteilt sich das Reaktionsmittel mehr und mehr im Abgasstrahl. Dies bedarf aber einer gewissen Mischzeit. Dies bedeutet, dass die beiden Substanzen eine gewisse Strecke zurücklegen müssen, um hinreichend miteinander vermischt zu sein, so dass die Mischeinrichtung entsprechend lang ausgelegt sein muss.

Durch eine Umlenkung des Abgasstroms an einer Strömungsabrisskante innerhalb der Mischeinrichtung werden Verwirbelungen erzeugt, die das Vermischen des Abgases und des Reaktionsmittels durch die hohe Turbulenz im folgenden Teilkanal verbessern. Gegenüber einer Mischeinrichtung, die lediglich aus einem geraden Rohrstück ohne Strömungsabrisskanten besteht, sind die benötigte Mischzeit und damit die notwendige Strecke vermindert. Zudem wird die effektive Mischstrecke, die die beiden Substanzen innerhalb der Mischeinrichtung zurücklegen, durch die Umlenkung grösser als die Gesamt-Baulänge der Mischeinrichtung. Im Gegensatz zu den üblichen statischen Mischern kann die Vermischung durch Umlenkung an einer Strömungsabrisskante zudem ohne störende

Leitbleche im Strömungsquerschnitt erfolgen, auf denen sich Ablagerungen des Reaktionsmittels bilden können. Durch die Vergrösserung der internen Oberfläche wird die vollständige Verdampfung verbessert. Eine Strömungsabrisskante als einfaches Bauelement ermöglicht eine effiziente Verwirbelung und ist nicht mit einem spürbaren Druckverlust verbunden, der bei anderen Einbauten wie z. B. Lochblechen auftritt. Zudem sind Strömungsabrisskanten günstiger in der Herstellung als andere Elemente.

Insgesamt können so deutlich kürzere Mischeinrichtungen bereitgestellt werden, die kleiner und kompakter gebaut sind, und dabei trotzdem zu einer guten Vermischung der beiden Subtanzen und damit zur effektiven Stickoxid-Entfernung führen. Es wird einfacher, die Mischeinrichtung an die im Einzelfall unterschiedlichen Platzverhältnisse anzupassen. Gleichzeitig können bei Bedarf Einbauten vermieden werden, an denen leicht Ablagerungen entstehen können.

Die Mischeinrichtung für das Reaktionsmittel sollte immer vor dem SCR-Reaktor in Richtung des Abgasstroms angeordnet sein. Weiter ist es von Vorteil, wenn sich zwischen Eindüsung und SCR-Reaktor kein Oxidationsreaktor und/oder DPF mit oxidierender Beschichtung befindet. Auf diesen Katalysatoroberflächen würde sonst das Reduktionsmittel NH₃ ganz oder teilweise zu NOx oxidiert, bevor es zur Reaktion auf dem SCR-Katalysator kommen kann. So besteht ein typischer Abgasstrang eines Dieselmotors aus einem Oxidationskatalysator (Oxi), einem Russfilter (DPF), einer HWL-Eindüsung, einer Mischeinrichtung und einem SCR-Reaktor.

### Querschnitt der Mischeinrichtung:

Vorzugsweise ist die Mischeinrichtung an der Stirnseite, an der der Abgasstrom austritt, derart dimensioniert, dass sie einen Gesamt-Querschnitt aufweist, der gleich gross ist wie ein Gesamt-Querschnitt der eingangsseitigen Stirnseite eines nachfolgenden Reaktors. Aufeinander passende Querschnitte erleichtern das Zusammenbauen der beiden Elemente und ersparen teure Übergänge.

In der häufigsten Ausführungsform wird die gesamte Mischeinrichtung einen konstanten Querschnitt aufweisen. Es ist aber auch möglich, dass die beiden Stirnseiten unterschiedlich dimensioniert sind. Dies ist insbesondere bei baulichen Besonderheiten im Umfeld des Reaktors bzw. der Mischeinrichtung denkbar.

### Gemeinsames Gehäuse:

In einer bevorzugten Ausführungsform sind die Mischeinrichtung und der nachfolgende Reaktor in einem gemeinsamen Gehäuse angeordnet. D. h., die Mischeinrichtung liegt gemeinsam mit einem SCR-Reaktor als ein Bauteil vor. Dies vereinfacht notwendige Ein- oder Umbauten an Abgassträngen, da nur ein und nicht zwei Bauteile montiert werden müssen. Auch ein notwendiger Übergang zwischen Mischeinrichtung und Reaktor entfällt.

Es kann aber auch von Vorteil sein, wenn die Mischeinrichtung als eigenes Bauteil vorliegt, und sich somit die Mischeinrichtung und der nachfolgende Reaktor in separaten Gehäusen befinden. Dadurch ist es möglich, Mischeinrichtung und Reaktor einem bestimmten Platzangebot entsprechend flexibel anzuordnen. An Spezialmaschinen, an denen z. B. aus Platzmangel keine direkte Aneinanderreihung der beiden Bauteile möglich ist, können sie mit einem gewissen Abstand und/oder einem bestimmten Winkel zueinander angebracht werden. Die beiden Gehäuse können mit geeigneten lösbaren Verbindungsmechanismen versehen sein, so dass die Mischeinrichtung mit geringem Aufwand vom Reaktor gelöst und an ihm wieder fixiert werden kann.

### Unterteilung in Teilkanäle:

Optional ist die Mischeinrichtung in ihrem Gesamt-Längsschnitt in drei Teilkanäle unterteilt. In dem Fall verlaufen die Teilkanäle senkrecht zur Austrittsrichtung des Abgases. Sie sind ebenfalls über eine Umlenkstelle miteinander verbunden und ergeben insgesamt eine Mischstrecke, die die Länge der drei Teilkanäle und der Umlenkstelle aufweist, in der der Abgasstrom mindestens zweimal um 180° umgelenkt wird.

### Gleiche Strömungsquerschnitte der Teilkanäle:

Bevorzugt weisen die drei Teilkanäle gleich grosse Strömungsquerschnitte auf. Die resultierende Mischstrecke weist somit einen konstanten Durchmesser auf, und es treten kaum Druckverluste auf. Normalerweise tritt das Abgas durch einen gegenüber dem Reaktor wesentlich kleineren Abgasstutzen ein und wieder aus. Der Querschnitt des nachfolgenden Reaktors ist immer wesentlich grösser als der Strömungsquerschnitt der Mischstrecke. Der Durchmesser der Mischstrecke muss aber andererseits auch meist grösser als der Durchmesser des Abgasrohrs nach dem Motor gewählt werden. Nur so können die notwendigen Verweilzeiten in der Mischstrecke und im Reaktor bei geringem Druckverlust und ausreichender Strömungsgeschwindigkeit in der Mischeinrichtung erreicht werden. Vorzugsweise ist der Querschnitt des Reaktors ca. 3 - 5 x grösser als der Strömungsquerschnitt der Mischstrecke.

Bevorzugt entspricht die Summe der Querschnitte der Teilkanäle einem Reaktorquerschnitt. So weist die kompakte Mischeinrichtung Aussenabmessungen auf, die denen des ggf. vor- (Oxidationskatalysator und DPF) und/oder des ggf. nachgeschalteten Reaktors (DPF/SCR oder SCR) entsprechen. Durch die passende Grösse können sie einfach untereinander verschweisst oder durch übliche Flansche (Schrauben, Klammern) verbunden werden. Zudem werden so grösstmögliche Teilkanäle bereitgestellt und der Platz innerhalb der Mischeinrichtung optimal genutzt.

Es ist aber auch möglich, dass die Summe der Querschnitte der Teilkanäle kleiner ausfällt, als der Querschnitt eines nachfolgenden Reaktors. Der nicht beanspruchte Platz kann für andere Elemente, wie z. B. eine zusätzliche Ummantelung, Halterungen oder andere Montagelemente beansprucht werden, ohne dass der Gesamtradius der Mischeinrichtung grösser ausfällt.

### Drei Teilkanäle:

Erfindungsgemäß ist die Mischeinrichtung in drei Teilkanäle unterteilt, wobei die Teilkanäle durch exzentrisch angeordnete Trennbleche begrenzt sind. Die Trennbleche werden innerhalb der Mischeinrichtung so positioniert, dass drei Teilkanäle entstehen. Die drei Teilkanäle werden derart zu einer Mischstrecke verbunden, dass ein Abgasstrom mindestens zweimal um jeweils 180° umgelenkt wird. Eine zweifache Ablenkung bzw. Umlenkung verbessert die Durchmischung gegenüber nur einer Umlenkung deutlich.

Mit drei Teilkanälen ist es zudem möglich, den Eingang und Ausgang des Abgasstroms an den gegenüberliegenden Seiten der Mischeinrichtung auf einer Achse senkrecht zum Gesamt-Querschnitt anzuordnen. Dies ist von Vorteil, wenn man einen linearen Abgasstrang aufbauen möchte.

Unter einer exzentrischen Anordnung der Trennbleche ist in dem Zusammenhang die Tatsache gemeint, dass die Trennbleche die gemeinsam mit den Aussenwänden der Mischeinrichtung die Teilkanäle definieren, eigene Hauptachsen aufweisen, die nicht mit der Hauptachse der Mischeinrichtung zusammenfallen. Sie sind also aus dem Zentrum gerückt. Exzentrische Anordnungen eignen sich für kleine Mischeinrichtungen, da bei ihnen das Reaktionsmittel nicht zentral zugegeben werden kann. Die typischen Bauweisen erlauben es nicht, eine entsprechende Düse im Zentrum vorzusehen.

### Kreisförmiger Querschnitt:

Die Mischeinrichtung ist im Gesamt-Querschnitt kreisförmig. Dabei handelt es sich um einen Kreis mit Radius R.

Besonders bevorzugt weist die Mischeinrichtung den gleichen Querschnitt auf wie der nachgeschaltete Reaktor.

### Gleicher Querschnitt der Teilkanäle:

Bevorzugt weisen die drei Teilkanäle der Mischeinrichtung den gleichen Querschnitt auf. Vorteilhaft ist es, wenn die drei Teilkanäle und auch die Umlenkstellen zwischen den Teilkanälen den gleichen Querschnitt aufweisen, so dass die gesamte Mischstrecke einen konstanten Strömungsquerschnitt hat. Bevorzugt entspricht dieser Strömungsquerschnitt einem Drittel des Gesamt-Querschnittes der Mischeinrichtung. So wird der gesamte Platz, den die Mischeinrichtung einnimmt, ausgenutzt.

Ein konstanter Strömungsquerschnitt verhindert Druckverluste und garantiert so konstante Verweilzeiten des Abgases in der Mischeinrichtung bzw. im nachgeschalteten Reaktor. Durch die Aufweitung des Durchmessers auf das Dreifache beim Übergang zwischen Mischeinrichtung und SCR-Reaktor wird das Abgas hinreichend verlangsamt, dass es mit der richtigen Geschwindigkeit an den katalytisch aktiven Oberflächen des Reaktors vorbeiströmt, damit eine Reduktion der Stickoxide stattfinden kann.

Es ist nicht ausgeschlossen, dass die Querschnitte der Teilkanäle voneinander verschieden sind, soweit dadurch die Strömung nicht wesentlich behindert wird oder im Gegenzug andere Vorteile erreicht werden.

### Trennbleche mit Kreisbogenprofil:

Erfindungsgemäß sind die Trennbleche, die die Teilkanäle definieren, im Profil gebogen, so dass sie ein Kreisbogenprofil besitzen. Dabei weisen sie einen Krümmungsradius r auf, der dem Radius R des Gesamt-Querschnitts der Mischeinrichtung gleicht. Ihr Radius entspricht also dem Radius des Gehäuses.

Diese übereinstimmende Krümmung erleichtert den Aufbau einer Mischeinrichtung mit drei Teilkanälen, wobei diese einen konstanten Querschnitt haben. Die gebogenen Trennbleche entsprechen jeweils einem Kreisbogen der Mischeinrichtung. Das Zentrum Z der Mischeinrichtung liegt dabei auf der Hauptachse. Die Zentren Z1 und Z2 der gebogenen Trennbleche sind aus dem Zentrum Z der Mischeinrichtung verschoben. Der Gesamt-Querschnitt wird so in drei gleich grosse Teile unterteilt.

Die in die Umlenkstellen weisenden Kanten der gebogenen Trennbleche können gerade ausgebildet sein. Dann kann eine Mischeineinrichtung mit dem gleichen Strömungsquerschnitt in den Teilkanälen und auch in den Umlenkstellen zwischen den Teilkanälen besonders einfach konstruiert werden.

In einer besonderen Ausführungsform weisen die gebogenen Trennbleche an den Kanten in den Umlenkstellen Aussparungen auf. Dadurch wird der Strömungsquerschnitt an dieser Stelle verändert, so dass die Strömungsquerschnitte im Bereich der Umlenkstellen grösser sind, als die Strömungsquerschnitte in den Teilkanälen. Gleichzeitig werden jedoch zusätzliche Verwirbelungen erzeugt, die den Mischungsgrad erhöhen.

### Konzentrische Teilkanäle:

In einer nicht erfindungsgemässen Ausführungsform ist die Mischeinrichtung in drei Teilkanäle unterteilt, wobei die Teilkanäle konzentrisch angeordnet sind. Dies bedeutet, dass die Teilkanäle um eine gemeinsame Hauptachse angeordnet sind, dabei aber unterschiedliche Durchmesser aufweisen. Die Teilkanäle sind über Umlenkstellen miteinander verbunden, so dass eine Mischstrecke entsteht, in der ein Abgasstrom mindestens zweimal um jeweils 180° umgelenkt wird. Eine zweifache Umlenkung des Abgasstroms ermöglicht eine gute Vermischung mit dem Reaktionsmittel.

Ein konzentrischer Aufbau der Teilkanäle erweitert die Möglichkeiten, Düsen für das Reaktionsmittel in der Mischeinrichtung zu positionieren. Dabei können die Mischeinrichtungen zum einen derart betrieben werden, dass ein Abgasstrom von aussen nach innen geleitet wird. Das bedeutet, dass zuerst der äusserste Teilkanal mit dem grössten Durchmesser durchströmt wird, und das Abgas aus dem innersten Teilkanal mit dem kleinsten Durchmesser aus der Mischeinrichtung tritt. Dabei können mehrere Düsen im äussersten Kanal vorgesehen sein.

Bevorzugt werden mehrere Düsen an den Anfang des äussersten ersten Teilkanals, dessen Querschnitt einem Kreisring entspricht, positioniert. Es werden die besten Durchmischungen erzielt, wenn die Düsen möglichst symmetrisch in einem Querschnitt des Kreisrings angeordnet sind, d. h. in dem ersten Teilkanal den gleichen Abstand zum Eintrittsbereich des Abgases einnehmen und dabei über den gesamten Umfang mit dem grösstmöglichen Abstand zueinander verteilt sind. Bei zwei Düsen wird vorteilhafterweise eine einander gegenüberliegende Anordnung gewählt. Mit zunehmender Anzahl der Düsen verringern sich die Abstände der Düsen untereinander.

Es ist auch möglich, nur eine Düse vorzusehen, oder mehrere Düsen nicht symmetrisch verteilt vorzusehen. Dadurch werden aber unter Umständen etwas schlechte Durchmischungsgrade erzielt.

Zum anderen kann das Abgas auch umgekehrt durch die konzentrische Mischeinrichtung strömen, d. h. von innen nach aussen. Es tritt in den innersten Teilkanal mit dem kleinsten Durchmesser ein und verlässt die Mischeinrichtung durch den äusseren Teilkanal mit dem grössten Durchmesser. Dabei kann eine Düse zum Versprühen des Reaktionsmittels zentral im inneren Teilkanal vorgesehen sein.

Optional kann ein zusätzlicher Sprühtrichter an der Düse vorgesehen sein, der die Durchmischung des Reaktionsmittels mit dem Abgas verbessert.

Die Teilkanäle einer konzentrischen Mischeinrichtung können im Querschnitt kreisrund ausgebildet sein und entsprechen dann einer Struktur aus einem zentralen Kreis und mehreren, immer grösseren Kreisringen. Der Querschnitt der Teilkanäle kann aber auch quadratisch, elliptisch oder beliebig ausgebildet sein. Allerdings sind gerade eckige Systeme mechanisch weniger stabil und können leicht durch die durchströmenden Abgase in Schwingung geraten, wodurch die Stabilität etwas gemindert ist und ggf. auch Nebengeräusche entstehen. Grundsätzlich können die Teilkanäle einer Mischeinrichtung auch unterschiedliche Formen im Querschnitt aufweisen, sie sollten nur einen gemeinsamen Schwerpunkt bzw. eine gemeinsame Hauptachse aufweisen.

Bevorzugt ist der zentrale innere Teilkanal als Kreiszylinder ausgebildet und weist somit in seiner Länge einen konstanten Querschnitt auf. So wird sichergestellt, dass der Strömungsquerschnitt konstant bleibt und somit möglichst kleine Druckverluste innerhalb der Mischeinrichtung auftreten. Dadurch wird die Strömungsgeschwindigkeit des Abgas-Reaktionsgemisch möglichst konstant gehalten. Dies ist ein Vorteil gegenüber konisch ausgebildeten Teilkanälen oder Systemen die Einbauten in der Mischstrecke aufweisen.

### Konzentrische Teilkanäle mit gleichem Strömungsquerschnitt:

Auch bei den konzentrisch aufgebauten Mischeinrichtungen ist es von Vorteil, wenn die drei Teilkanäle den gleichen Strömungsquerschnitt aufweisen. Ganz besonders von Vorteil ist es, wenn die drei Teilkanäle und auch die Umlenkstellen zwischen den Teilkanälen den gleichen Strömungsquerschnitt aufweisen, so dass die gesamte Mischstrecke einen konstanten Strömungsquerschnitt hat. Bevorzugt entspricht dieser Strömungsquerschnitt einem Drittel des Gesamt-Querschnittes der Mischeinrichtung. Der konstante Strömungsquerschnitt minimiert Druckverluste, so dass konstante Verweilzeiten des Abgases in der Mischeinrichtung bzw. im nachgeschalteten Reaktor eingestellt werden können. Am Ende der Mischeinrichtung erweitert sich der Durchmesser auf das Dreifache, also auf den Durchmesser des nachfolgenden Reaktors. Dadurch wird das Abgas verlangsamt, und kann mit der geringeren Geschwindigkeit an den katalytisch aktiven Oberflächen des Reaktors vorbeiströmen, wo eine Reduktion der Stickoxide stattfindet.

Eine konzentrische Mischstrecke entspricht ineinander liegenden Zylindern, die von aussen nach innen einen kleineren Durchmesser aufweisen. An einer Umlenkstelle wird das Abgas um eine Kante eines Zylinders umgelenkt. Diese Kante kann als durchgehende, kontinuierliche Kante ausgebildet sein. Besonders dann kann die Mischeineinrichtung einfach derart konstruiert werden, dass die Teilkanäle und auch die Umlenkstellen zwischen den Teilkanälen den gleichen Strömungsquerschnitt aufweisen.

In einer besonderen Ausführungsform sind im Bereich der Kanten in den Umlenkstellen Aussparungen vorgesehen. Dadurch wird der Strömungsquerschnitt an dieser Stelle verändert, so dass die Strömungsquerschnitte im Bereich der Umlenkstellen grösser sind, als die Strömungsquerschnitte in den Teilkanälen. Gleichzeitig werden jedoch zusätzliche Verwirbelungen erzeugt, die den Mischungsgrad erhöhen.

Weist eine Kante eine Aussparung auf, so kann gegebenenfalls ein durchgehend konstanter Strömungsquerschnitt eingestellt werden, indem der gesamte Zylinder in seiner Länge angepasst wird.

### Dosierstelle im ersten Teilkanal:

Besonders bevorzugt ist in wenigstens einem ersten Teilkanal mindestens eine Dosierstelle für ein flüssiges oder gasförmiges Reaktionsmittel angeordnet. Das Reaktionsmittel wird möglichst beim Eintritt des Abgases in die Mischeinrichtung zugegeben, so dass die maximale Strecke zum Vermischen zur Verfügung steht.

Optional ist die Dosierstelle bereits vor der Mischeinrichtung angeordnet, was mehr Möglichkeiten bei der Konstruktion einer entsprechenden Mischeinrichtung bietet. Allerdings bedarf es dann einer genauen Abstimmung zwischen Dosierstelle und Mischeinrichtung, da die Grössenverhältnisse angepasst werden müssen. So entfällt die Möglichkeit, die Mischeinrichtung mit einem integrierten Dosiersystem als bereits abgestimmte Einheit zu verwenden, bei der die Feineinstellungen bereits vorgenommen worden sind. Auch kann sich die Dosierstelle in einem Teilkanal befinden, der erst später vom Abgas durchströmt wird. Allerdings kann dann nicht mehr die komplette Mischstrecke der Mischeinrichtung genutzt werden. Dies sollte nur bei hinreichend langen Mischstrecken erfolgen, da ansonsten Ablagerungen des Reaktionsmittels innerhalb der Mischeinrichtung entstehen.

Entscheidend ist, dass das Abgas-Lösungsmittel-Gemisch eine hinreichend lange Zeit hat, damit die Tröpfchen der Lösung verdampfen können, bevor das Gemisch zur ersten Umlenkstelle gelangt. Die Mindestlänge einer ersten Teilstrecke hängt dabei von der Tröpfchengrösse des Reaktionsmittels ab, welches dem Abgas zugegeben wird. Auch wenn man viele andere Parameter anpassen kann, so ist die Tröpfchengrösse der Faktor, der nicht ohne Weiteres angepasst werden kann. Daher wird eine Mindeststrecke benötigt, innerhalb der das Reaktionsmittel verdampfen soll und nicht an der Umlenkstelle ablagert. Bevorzugt ist also die Dosierstelle derart innerhalb der Mischeinrichtung vorgesehen, dass das Gemisch zunächst eine möglichst lange Strecke zurücklegen kann.

### Leitelemente:

Um die Wirksamkeit einer erfindungsgemässen Mischeinrichtung weiter zu erhöhen, sind in den Teilkanälen und/oder an den Umlenkstellen zusätzliche Leitelemente und/oder statische Mischer vorgesehen. Diese zusätzlichen Einbauten erzeugen weitere Verwirbelungen und verbessern so die Durchmischung. Dabei werden statische Mischer vorzugsweise am Ende des letzten Teilkanals eingesetzt, da sie dort von aussen zugänglich sind.

Es kann aber auch auf zusätzliche Leitelemente und/oder statische Mischer in der Mischeinrichtung verzichtet werden. Dies insbesondere im Lichte der eingangs genannten Ablagerungsgefahr.

Es können auch Lochbleche am Ende der Mischeinrichtung vorgesehen sein, insbesondere am Ende der Mischeinrichtung, also beim Übertritt des Abgas-Reaktionsmittel-Gemisches in den nachgeschalteten Reaktor. Bevorzugt ist ein solches Lochblech beim Übertritt in den nachgeschalteten Reaktor schräg eingebaut.

Es kann aber auch auf ein Lochblech verzichtet werden.

Eine verbesserte Durchmischung des Abgases mit dem Reaktionsmittel kann mittels eines Sprühtrichters vor einer Dosiereinrichtung erreicht werden. Das gilt insbesondere für konzentrische Mischeinrichtungen die von innen nach aussen durchströmt werden. Dabei befindet sich die Dosiereinrichtung zentral im inneren Teilkanal. Der Sprühtrichter weist die Form eines Kegelstumpfs auf, dessen Deckfläche geschlossen und Grundfläche offen ist. Er weist mit der geschlossenen Deckfläche in Richtung des einströmenden Abgases, während sich die Dosiereinrichtung im Bereich der offenen Grundfläche befindet. Durch den zusätzlichen Sprühtrichter, der sich in Strömungsrichtung vor der Düse befindet, und mit seiner geschlossenen Deckfläche in Richtung des Abgasstroms zeigt, findet nahe der Dosiereinrichtung eine Verwirbelung des Abgases statt, so dass die Tröpfchen des Reaktionsmittels direkt in die Verwirbelung eingesprüht und dadurch effizienter im Abgas verteilt werden.

### Aussparung an Trennblech:

Optional sind im Bereich der Umlenkstellen Aussparungen an den Trennblechen vorgesehen. Dadurch wird die Geometrie der Strömungsabrisskante verändert, was zu zusätzlichen Verwirbelungen führt und damit die Vermischung verbessert. Dabei wird der Strömungsquerschnitt in der Umlenkung vergrössert, was ggf. durch eine Anpassung der Länge des Trennblechs ausgeglichen wird.

### Axialer Eingang:

In einer bevorzugten Ausführungsform ist der Eingang für den Abgasstrom in die Mischeinrichtung axial angeordnet. Solche Mischeinrichtungen können besonders einfach in linear angeordnete Abgasstränge eingebaut werden.

Für besondere Anordnungen ist es aber möglicherweise von Vorteil, wenn der Abgasstrom radial (bzw. quer zur Achse des Ausgangs aus der Mischeinrichtung) in die Mischeinrichtung eingeht. Unter Umständen können auch spezielle Winkel für Sonderanfertigungen notwenig sein.

Auch eine Mischeinrichtung als separate Vorrichtung von einem Reaktor ist Gegenstand der Erfindung. Gemäss der Erfindung ist diese zur Anwendung bei der katalytischen Entfernung von Stickoxiden aus einem Abgasstrom geeignet, wobei in der Mischeinrichtung ein gasförmiges oder flüssiges Reaktionsmittel im Abgasstrom homogen verteilt wird, und der Abgasstrom danach einem (separaten) Reaktor zur katalytischen Entfernung von Stickoxiden nach dem SCR-Verfahren zugeführt wird. Innerhalb der Mischeinrichtung ist mindestens eine Umlenkstelle mit einer Strömungsabrisskante vorgesehen, an der der Abgasstrom umgelenkt wird.

Optional kann diese Mischeinrichtung mit den weiter oben als bevorzugt beschriebenen Merkmalen der Gesamt-Vorrichtung ausgestattet sein.

Bevorzugt weist ein erster Teilkanal der Mischeinrichtung im Bereich zwischen einer Dosierstelle und einer ersten Umlenkung einen konstanten Querschnitt auf. Je nach Ausführungsform der Mischeinrichtung handelt es sich bei dem ersten Teilkanal, also bei dem Teilkanal, der vom Abgas als erster durchströmt wird, um den inneren oder äusseren Teilkanal einer konzentrisch aufgebauten Mischeinrichtung. Diese sind bevorzugt kreisrund bzw. kreisringförmig im Querschnitt. Es kann sich aber auch um einen ersten Teilkanal einer exzentrischen Mischeinrichtung handeln. Ein konstanter Querschnitt im ersten Teilkanal minimiert Druckänderungen im System, so dass ein kontinuierlicher Durchfluss des Abgas-Reaktionsmittel-Gemisches stattfinden kann.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: einen typischen Abgasstrang eines Dieselmotors mit Oxidationskatalysator (OXI), Dieselpartikelfilter (DPF), HWL-Eindüsung, rohrförmigem Mischer und SCR-Reaktor;
- Fig. 2: einen Längsschnitt durch eine erfindungsgemäße Ausführung der Mischeinrichtung für einen runden DPF/SCR-Reaktor mit vorgeschaltetem Reaktor für die Aufnahme eines Oxidationskatalysators;
- Fig. 3a,b: einen vergrößerten Ausschnitt der Mischeinrichtung im Längs- und Querschnitt;
- Fig. 4: eine Mischeinrichtung nach Fig. 3 mit umgekehrter Anordnung und Strömungsrichtung;
- Fig. 5a,b: eine verbesserte Mischeinrichtung mit Aussparung und ausgeklapptem Flügel an den Trennblechen und mit zusätzlichem statischen Mischer;
- Fig. 6a,b: eine Ausführungsvariante einer nicht erfindungsgemäßen Mischeinrichtung mit rechteckigem Querschnitt und geraden Trennblechen;
- Fig. 7a,b: einen Abgasstrang in einer erfindungsgemäßen Anordnung mit zwei Reaktorgehäusen, bei der die Mischeinrichtung zusammen mit einem Oxidationskatalysator in einem ersten Gehäuse und die DPF-Einheit mit dem SCR-Reaktor im einem zweiten Gehäuse untergebracht sind;
- Fig. 8: eine Anordnung der erfindungsgemäßen Mischeinrichtung direkt nach einem Eintrittsgehäuse mit zwei möglichen Eintritten;
- Fig. 9a,b: eine Ausführung einer nicht erfindungsgemäßen Mischeinrichtung mit rechteckigem Querschnitt mit nur zwei Kanälen und nur einem Trennblech;
- Fig. 10a,b: eine Ausführung einer nicht erfindungsgemäßen Mischeinrichtung mit rechteckigem Querschnitt mit radialem Eintritt, drei Trennblechen und vier gleichen Teilkanälen;
- Fig. 11 a,b: eine Variante einer nicht erfindungsgemäßen Mischeinrichtung mit rechteckigem Querschnitt mit zwei Trennblechen, die senkrecht zur Strömungsrichtung im nachfolgenden SCR-Reaktor verlaufen;
- Fig. 12a,b: eine Variante einer nicht erfindungsgemäßen Mischeinrichtung mit drei im Strömungsquerschnitt gleich großen, runden und konzentrischen Teilkanälen in einem runden Querschnitt, Mehrfacheindüsung und zusätzlichem statischen Mischer;
- Fig. 13a,b: eine Variante einer nicht erfindungsgemäßen Mischeinrichtung mit quadratischer oder rechteckiger Form des äußersten Teilkanals und weiteren inneren Teilkanälen mit kreisförmigem Querschnitt mit außen angeordneter Mehrfacheindüsung;
- Fig. 14a,b: eine Variante einer nicht erfindungsgemäßen Mischeinrichtung mit quadratischer oder rechteckiger Form des äußersten Teilkanals und weiteren inneren Teilkanälen mit kreisförmigem Querschnitt mit zentral angeordneter Eindüsung;
- Fig. 15a,b: eine Variante einer nicht erfindungsgemäßen Mischeinrichtung mit quadratischer oder rechteckiger Form des äußersten Teilkanals und weiteren inneren Teilkanälen mit quadratischem oder rechteckigem Querschnitt mit außen angeordneter Mehrfacheindüsung;
- Fig. 16a-c: eine weitere Variante einer nicht erfindungsgemäßen Mischeinrichtung mit drei im Strömungsquerschnitt gleich großen, runden und konzentrischen Teilkanälen in einem runden Querschnitt mit außen angeordneter Mehrfacheindüsung;
- Fig. 17a-c: eine weitere Variante einer nicht erfindungsgemäßen Mischeinrichtung mit drei im Strömungsquerschnitt gleich großen, runden und konzentrischen Teilkanälen in einem runden Querschnitt mit zentral angeordneter Eindüsung.

Grundsätzlich sind in den Figuren gleiche Teile mit gleichen Bezugszeichen versehen.

### Wege zur Ausführung der Erfindung

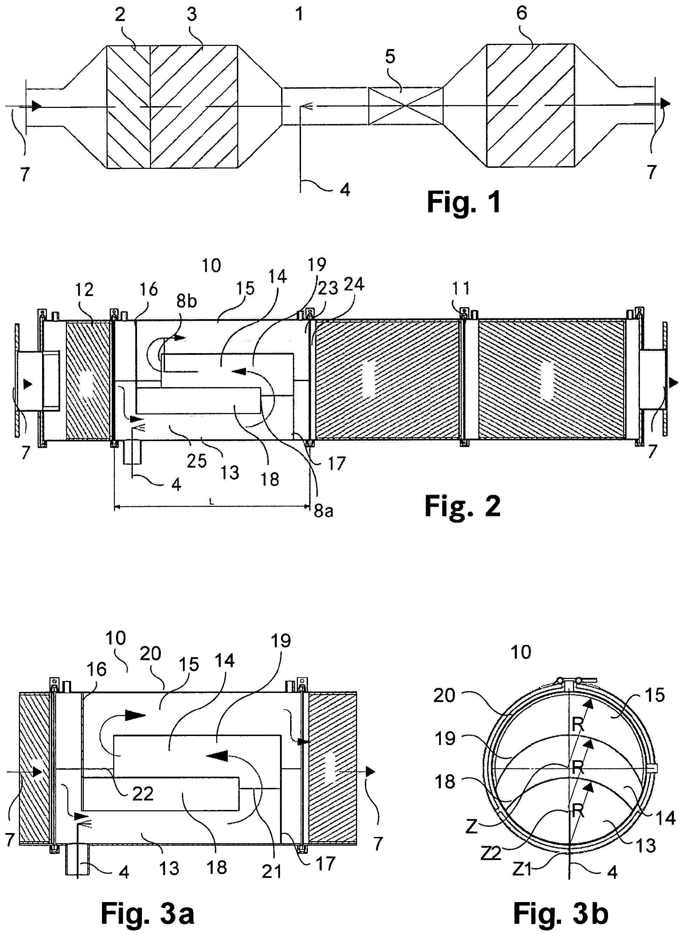

Fig. 1 zeigt einen typischen Abgasstrang 1 eines Dieselmotors. Das Abgas aus dem Motor strömt von links nach rechts zunächst durch einen Oxidationskatalysator 2 und dann durch einen Dieselpartikelfilter 3. Anschließend wird durch eine HWL-Düse 4 das Reaktionsmittel zugegeben und das Abgas mit dem Reaktionsmittel im Mischer 5 vermischt, bevor es den SCR-Reaktor 6 passiert. Der Mischer 5 ist direkt vor dem SCR-Reaktor 6 angeordnet und ist als Mischrohr ausgebildet. Ein solcher Abgasstrang 1 für mobile Zwecke (PKW, LKW, Baumaschinen etc.) weist nur beschränkt Platz auf, so dass die Anlagen innerhalb des verfügbaren Raums kaum zu integrieren sind. Insbesondere der Mischer 5 ist relativ kurz ausgebildet.

Fig. 2 zeigt einen Längsschnitt durch eine erste erfindungsgemäße Ausführung der Mischeinrichtung 10 für einen runden DPF/SCR-Reaktor 11 mit einem vorgeschalteten Reaktor für die Aufnahme eines Oxidationskatalysators 12. Die Mischeinrichtung 10 enthält drei Teilkanäle 13, 14, 15 mit gleichem Querschnitt, die exzentrisch angeordnet sind. Die Teilkanäle 13, 14, 15 und die sie verbindenden Umlenkstellen 8a,b werden definiert über die Seitenbleche 16, 17 und über die gebogenen Trennbleche 18, 19. Das Reaktionsmittel wird gleich am Anfang des Teilkanals 13, welchen das Abgas zuerst passiert, über eine HWL-Düse 4 zugeführt. Die Länge L der Mischeinrichtung 10 richtet sich bei einem flüssigen Reaktionsmittel nach den Erfordernissen der Verdampfung und
Mischung. Bei einem gasförmigen Reaktionsmittel sollte die Länge L der Mischeinrichtung 10 dem Zwei - Dreifachem des grössten senkrechten Abstandes der Trennbleche untereinander oder von der Gehäusewand entsprechen, da so die Wirbel optimal ausgenutzt werden. Die Summe der Teilkanäle 13, 14, 15 und der Umlenkstellen 8a,b eribt die Mischstrecke 25.

Fig. 3a,b zeigen einen vergrösserten Ausschnitt der Mischeinrichtung 10 im Längs- bzw. Querschnitt. Gemäss der bevorzugten Ausführung wird die Unterteilung der Mischeinrichtung 10 insbesondere durch zwei gebogene Trennbleche 18, 19 erreicht. Der Biegeradius R der beiden gebogenen Trennbleche 18, 19 entspricht dem Biegeradius des Gehäusemantels 20. Die Zentren Z1 und Z2 der gebogenen Trennbleche 18, 19 sind dabei so aus dem Zentrum Z des Reaktors mit dem Querschnitt A versetzt, dass drei im Querschnitt gleich grosse Teilkanäle 13, 14, 15 mit dem Querschnitt A/3 gebildet werden. Im Teilkanal 13, der in Strömungsrichtung verläuft, wird dem Abgasstrom das Reaktionsmittel über die Düse 4 fein zerstäubt zugeführt. Das Gemisch wird dann nach Passieren des ersten Teilkanals 13 um 180° in Teilkanal 14 umgelenkt und fliesst dann gegen die Strömungsrichtung. Anschliessend wird das Gemisch um 180° in Teilkanal 15 und somit wieder in Strömungsrichtung umgelenkt. Das Gemisch trifft dann aus dem Teilkanal 15 auf den nachgeschalteten SCR-Reaktor auf.

Auf der Eintrittsseite wird das Innere der Mischeinrichtung 10 stirnseitig durch das Seitenblech 16 abgeschlossen. Das Seitenblech 16 weist eine sichelförmige Öffnung auf, die den Eintritt in Teilkanal 13 freigibt. Umgekehrt erfolgt der Abschluss auf der Austrittsseite durch ein entsprechendes Seitenblech 17, das eine sichelförmige Öffnung für den Austritt aus Teilkanal 15 freigibt.

Der Druckverlust und der Abstand zum Austritt aus der Mischeinrichtung sollen ausreichend gross sein, um einen guten Druckausgleich und damit eine homogene Durchsatzverteilung im nachgeschalteten SCR-Reaktor zu gewährleisten. Wenn der Druckverlust dazu nicht ausreicht, können zusätzliche Lochbleche oder Leitelemente vor den Katalysator gesetzt werden.

Gemäss der Erfindung ist die Strömungsgeschwindigkeit in der Mischeinrichtung 10 überall gleich und ca. 3x grösser als die auf den Reaktor bezogene Geschwindigkeit. Damit werden zusätzliche Druckverluste durch Beschleunigung und Verzögerung der Strömung vermieden. Daher werden die axialen Abstände der Umlenkungen so gewählt, dass die Fläche der Durchtritte 21, 22 ebenfalls dem Querschnitt der Teilkanäle 13,14,15 entspricht bzw. im Beispiel mit 3 Kanälen A/3 beträgt.

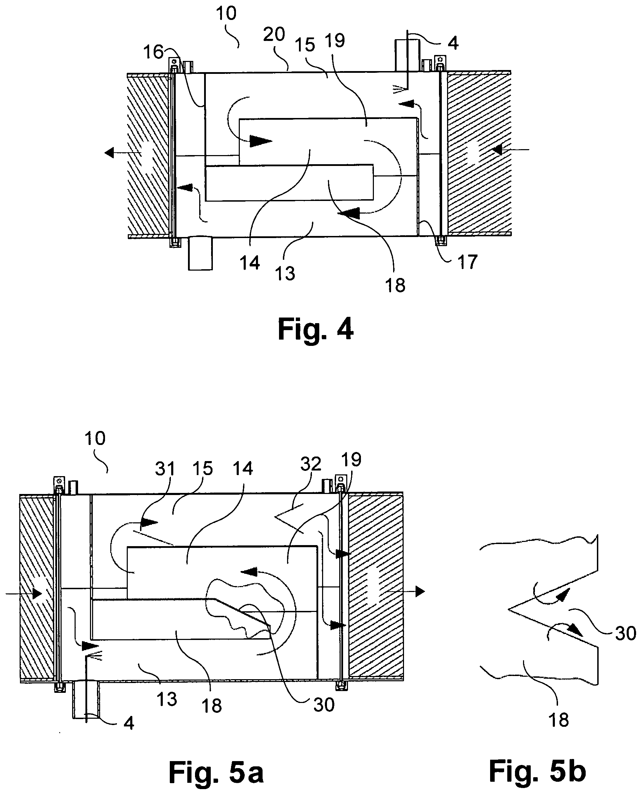

Grundsätzlich können alle Varianten auch in entgegengesetzter Richtung durchströmt werden bzw. angeordnet werden. Der Eintritt und die Eindüsung erfolgen also im letzten Teilkanal 15 und der Austritt beim ersten Teilkanal 13. So zeigt Fig. 4 eine Mischeinrichtung 10 nach Fig. 3 mit umgekehrter Anordnung und Strömungsrichtung.

Fig. 5a zeigt eine erfindungsgemässe Mischeinrichtung 10, die zusätzliche Elemente zur verbesserten Durchmischung enthält. Dabei kann es sich um eine Aussparung 30 an einem der gebogenen Trennbleche 18, 19 handeln. Auch können die gebogenen Trennbleche 18, 19 ausgeklappte Flügel 31 aufweisen. Es können auch zusätzliche statische Mischer 32 in den Teilkanälen 13,14,15 vorliegen. Fig. 5b zeigt eine Aussparung 30 an einem gebogenen Trennblech 18 in der Aufsicht.

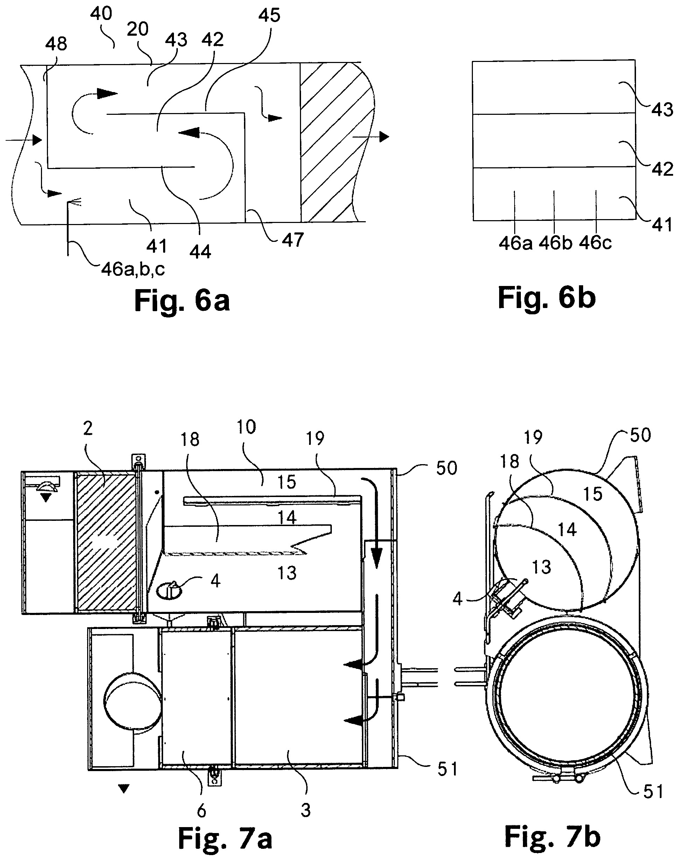

Fig. 6 zeigt eine weitere nicht erfindungsgemässe Mischeinrichtung 40 mit einem quadratischen Querschnitt. Die Mischeinrichtung 40 weist drei Teilkanäle 41, 42, 43 auf, die durch gerade Trennbleche 44, 45 definiert sind. Im Teilkanal 41 liegt eine HWL-Mehrfach-Düse 46a,b,c vor. Die stirnseitigen Seitenbleche 47, 48 sind bevorzugt als gerade Rechtecke ausgebildet und stehen senkrecht zu den Trennblechen 44, 45.

Fig. 7a,b zeigen eine Anordnung eines Abgasstrangs im Längs- und im Querschnitt, bei der die Mischeinrichtung 10 zusammen mit einem Oxidationskatalysator 2 in einem ersten Gehäuse 50 untergebracht ist. Diese Anordnung ist typisch für eine Baumaschine. Nach Passieren des Oxidationskatalysators 2 und Vermischung mit einem Reaktionsmittel in der Mischeinrichtung 10 strömt das Gemisch durch einen seitlichen Auslass in den anschliessenden Partikelfilter 3 und dann in den SCR-Reaktor 6, die sich zusammen in einem zweiten Gehäuse 51 befinden. Die Gehäuse 50 und 51 sind nebeneinander angeordnet, beim Übergang vom ersten in den zweiten Teil wird die Strömungsrichtung des Abgases umgekehrt. Die Abgaszufuhr und der Auslass befinden sich in diesem Ausführungsbeispiel nicht auf derselben Achse. In Fig. 7b ist die exzentrische Anordnung der Teilkanäle 13, 14, 15 innerhalb der Mischeinrichtung 10 zu sehen. Die Mischeinrichtung 10 wird durch zwei gebogene Trennbleche 18, 19 aufgeteilt.

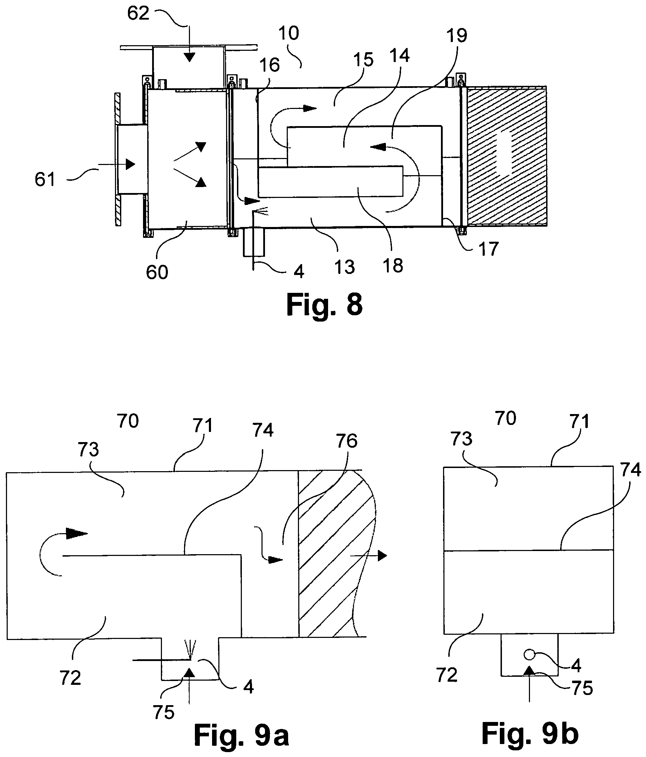

Fig. 8 zeigt eine Anordnung der erfindungsgemäßen Mischeinrichtung 10 direkt nach einem Eintrittsgehäuse 60 mit zwei möglichen Eintritten. Dabei handelt es sich einerseits um den axialen Eintritt 61 und andererseits um den radialen Eintritt 62. An die Mischeinrichtung 10 schließt sich ein SCR-Reaktor an.

Fig. 9a,b zeigen eine nicht erfindungsgemäße Mischeinrichtung 70 in einem eckigen Gehäuse 71 mit nur zwei Teilkanälen 72, 73 und einem geraden Trennblech 74 im Längs- und Querschnitt. Der Eintritt 75 ist radial angeordnet und befindet sich in der Nähe des Austritts 76 aus dem zweiten Teilkanal 73. Nach dem Eintritt 75 ist die HWL-Düse 4 vorgesehen. Der Abgasstrom wird in dieser Mischeinrichtung 70 einmal um 180° umgelenkt.

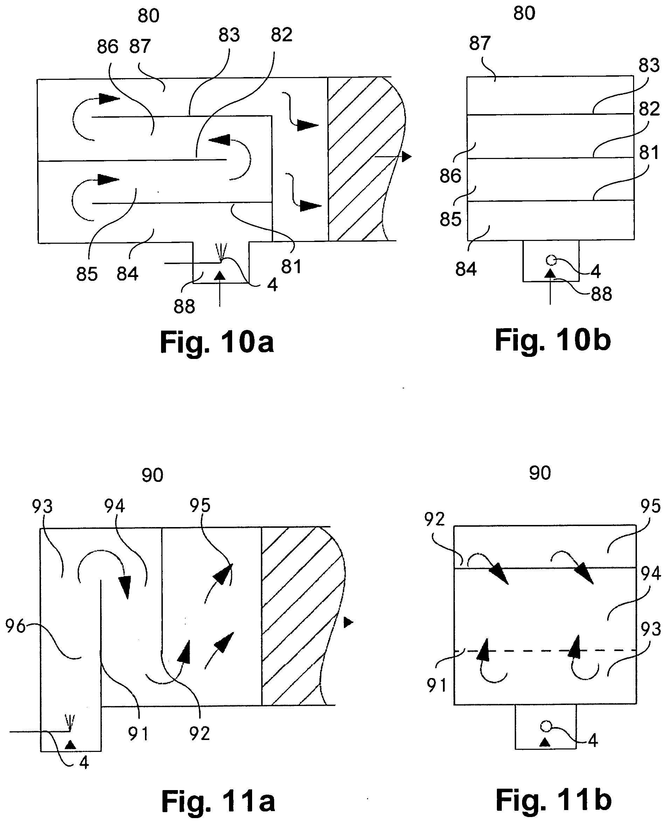

Eine weitere Mischeinrichtung 80 mit gerader Anzahl an Teilkanälen ist in Fig. 10a,b gezeigt. Durch drei Trennbleche 81, 82, 83 wird die Mischeinrichtung 80 in vier Teilkanäle 84, 85, 86, 87 unterteilt. Der radiale Eintritt 88 liegt in der Nähe des Austritts 89. Die HWL-Düse 4 befindet sich direkt nach dem Eintritt 88. In der Mischeinrichtung 80 wird der Abgasstrom drei Mal um 180° umgelenkt.

Die Trennbleche müssen nicht notwendigerweise parallel zur Strömungsrichtung im SCR-Reaktor angeordnet werden. Fig. 11 a,b zeigen eine Mischeinrichtung 90, bei der durch zwei gerade Trennbleche 91, 92 drei Teilkanäle 93, 94, 95 gebildet werden, die senkrecht zur Strömungsrichtung im SCR-Reaktor verlaufen. Die Summe der Teilkanäle 93, 94, 95 ergibt die Mischstrecke 96. Der Gesamt-Querschnitt der Mischeinrichtung 90 ist rechteckig.

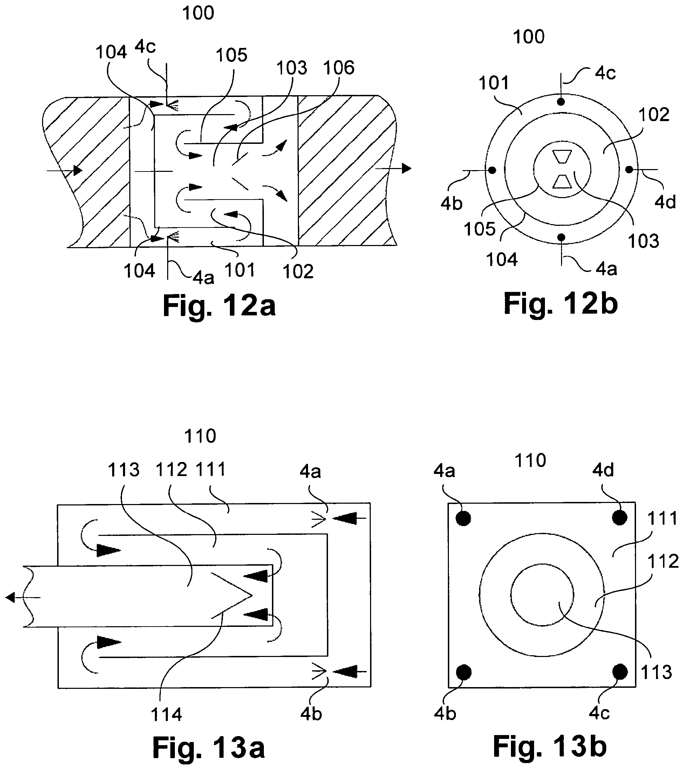

Neben den erfindungsgemässen exzentrischen Anordnungen der Trennbleche sind auch nicht erfindungsgemässe Varianten mit konzentrisch ausgebildeten Teilkanälen möglich. Fig.12a,b zeigen eine erste Mischeinrichtung 100 mit drei konzentrisch angeordneten Teilkanälen 101, 102, 103. Sie weisen je einen runden Querschnitt auf und sind bezüglich ihres Strömungsquerschnitts
gleich gross, d. h. dass sowohl die Querschnitte der Teilkanäle wie auch die Abstände zu den Stirnseiten vorzugsweise so gewählt sind, dass die Strömungsgeschwindigkeit überall gleich ist. Die Teilkanäle 101, 102, 103 werden durch die Trennbleche 104, 105 definiert. Das Abgas tritt zunächst in den äussersten Teilkanal 101 ein. Im vorderen Abschnitt des Teilkanals 101 sind vier HWL-Düsen 4a,b,c,d vorgesehen. Sie sind gleichmässig in einer Querschnittsebene verteilt. Zudem liegen im hinteren Bereich des innersten Teilkanals 103 statische Mischer 106 vor. Das Gas wird in der Mischeinrichtung 100 zwei Mal an jeweils einer Strömungsabrisskante um 180° umgelenkt.

Fig. 13a,b zeigen eine Mischeinrichtung110 mit konzentrisch angeordneten Teilkanälen 111, 112, 113, wobei der äusserste Teilkanal 111 einen rechteckigen Querschnitt hat, während die Teilkanäle 112 und 113 im Querschnitt rund sind. Die Strömungsquerschnitte sind derart gewählt, dass überall die gleiche Strömungsgeschwindigkeit herrscht. Die Mischeinrichtung 110 wird vom Abgas von aussen nach innen durchströmt, daher wird das Reaktionsmittel auch im äussersten Teilkanal 111 durch mehrere HWL-Düsen 4a,b,c,d zugegeben. Im Teilkanal 113 liegen statische Mischer 114 vor.

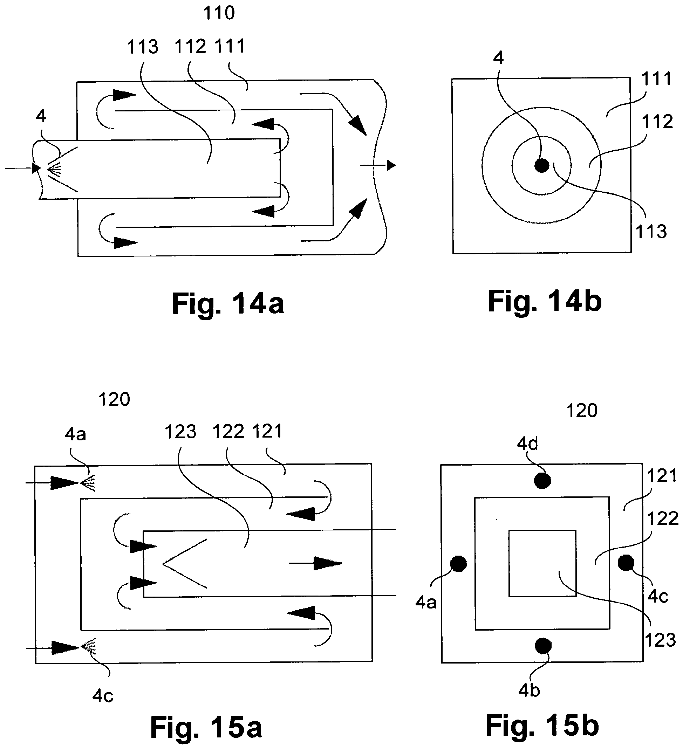

Dagegen wird in Fig. 14a,b die Mischeinrichtung 110 vom Abgas umgekehrt durchströmt, d. h. von innen nach aussen. Das Reaktionsmittel wird zentral über eine HWL-Düse 4 im innersten Teilkanal 113 zugegeben. Ein statischer Mischer liegt nicht vor.

Die Mischeinrichtung 120, abgebildet in Fig. 15a,b, unterscheidet sich von der Mischeinrichtung 110 lediglich in der Form des Querschnitts der Teilkanäle. Die Teilkanäle 121, 122, 123 sind nämlich alle rechteckig ausgebildet. In der Fig. 15 wird die Mischeinrichtung von aussen nach innen durchströmt.

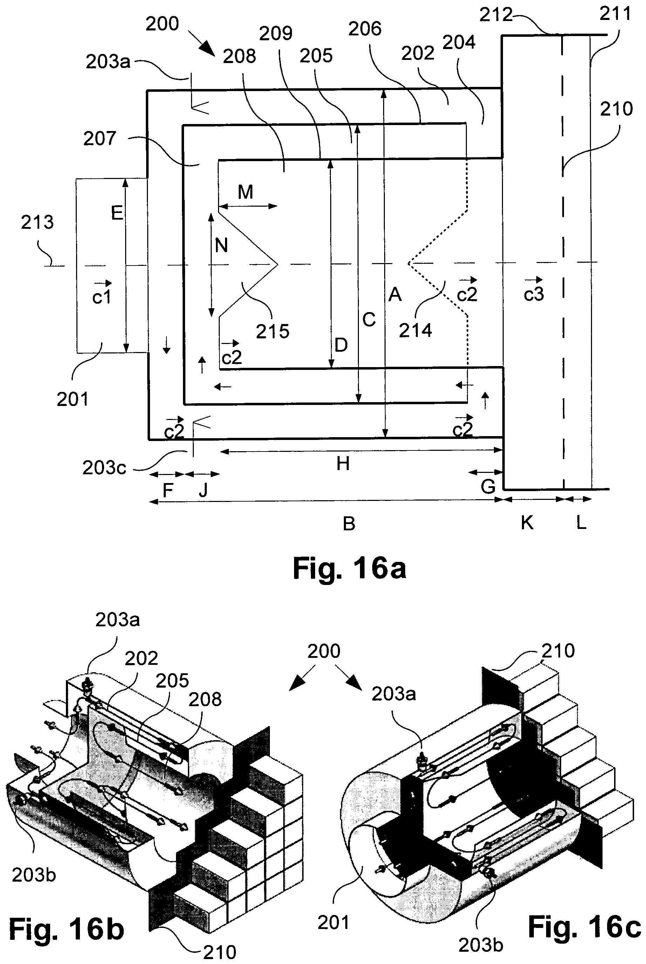

Fig. 16a-c zeigt eine konzentrisch aufgebaute Mischeinrichtung 200 im Querschnitt (Fig. 16a) und in zwei perspektivischen Ansichten (Fig. 16b,c). Es handelt sich dabei um ein konzentrisch aufgebautes Mischsystem mit Multieindüsung, das von aussen nach innen durchströmt wird.

Die Mischeinrichtung 200 wird vom Abgas von links nach rechts durchströmt. Das Abgas tritt durch die kreisrunde Zuleitung 201 in die Mischeinrichtung 200 ein und wird in den äusseren Teilkanal 202 geleitet. Der Querschnitt des Teilkanals 202 ist ein Kreisring. Im vorderen Bereich des äusseren Teilkanals 202 befinden sich vier Eindüsstellen 203a-d. Diese sind im Teilkanal 202 symmetrisch angeordnet und nehmen relativ zueinander den grösstmöglichen Abstand ein, sie befinden sich also bezüglich der Längsachse 213 der Mischeinrichtung 200 im gegenseitigen Winkel von 90°. In Fig. 16a sind zwei von ihnen, nämlich 203a oben und 203c unten angeordnet, die zwei weiteren (203b, 203d) befinden sich vor bzw. hinter der Zeichenebene. In den perspektivischen Ansichten in Fig. 16b, c ist jeweils die obere Eindüsstelle 203a und die im vorderen Bereich angeordnete Eindüsstelle 203b gezeigt. Über die Eindüsstellen 203a-d wird ein Reaktionsmittel in Form von Tröpfchen in den Abgasstrom gesprüht. Das Abgas-Reaktionsmittel-Gemisch strömt durch den äusseren Teilkanal 202 von links nach rechts bis zur ersten Umlenkstelle 204. An der ersten Umlenkstelle 204 tritt das Abgas-Reaktionsmittel-Gemisch vom äusseren Teilkanal 202 in den mittleren Teilkanal 205, dabei wird seine Strömungsrichtung um die Kante der ersten Innenwand 206, die eine Strömungsabrisskante ist, um 180° gewendet. So strömt das Abgas-Reaktionsmittel-Gemisch im mittleren Teilkanal 205 gegenläufig zur Strömungsrichtung im äusseren Teilkanal 202, also von rechts nach links. Der mittlere Teilkanal 205 weist ebenfalls einen kreisringförmigen Querschnitt auf. Am Ende des mittleren Teilkanals 205 gelangt das Abgas-Reaktionsmittel-Gemisch zur zweiten Umlenkstelle 207, wo es vom mittleren Teilkanal 205 in den inneren Teilkanal 208 tritt, dabei wird seine Strömungsrichtung um die Kante der zweiten Innenwand 209, eine weitere Strömungsabrisskante, um 180° gewendet, so dass es von links nach rechts strömt. Der innere Teilkanal 208 entspricht einem Zylinder mit einem kreisrunden Querschnitt. Am Ende des inneren Teilkanals 208 verlässt das Abgas-Reaktionsmittel-Gemisch die Mischeinrichtung 200, es tritt durch das Lochblech 210 und strömt durch den Wabeneintritt 211 in den Bereich des Reaktors 212.

Die Teilkanäle 202, 205, 208 sind konzentrisch um die Längsachse 213 aufgebaut. Die besten Mischungsgrade erhält man, wenn die Mischeinrichtung 200 einen Aussendurchmesser A aufweist, der der Länge B des äusseren Teilkanals 202 entspricht, z. B. A = B = 1000 Promille. Der Zylinder, der der ersten Innenwand 206 entspricht und den mittleren Kanal 205 nach aussen begrenzt weist einen Durchmesser C = 816 Promille auf. Der zylinderförmige innere Teilkanal 208, definiert durch die zweite Innenwand 209, hat einen Durchmesser D = 577 Promille. Das Abgas wird durch die kreisrunde Zuleitung 201 mit einem Durchmesser von E = 476 Promille in die Mischeinrichtung 200 geleitet.

Die Länge B des äusseren Teilkanals 202 definiert die Länge der Mischeinrichtung 200. Dabei hat der Eingang in den äusseren Teilkanal 202 eine Länge F = 175 Promille. Die erste Umlenkstelle 204 hat eine Länge G = 102 Promille. Die zweite Umlenkstelle 204 hat eine Länge J = 144 Promille. Der innere Teilkanal 207 weist eine Länge H = 681 Promille auf. An die Mischeinrichtung schliesst sich ein Reaktor 210 an. In einem Abstand von K = 170 Promille befindet sich das Lochblech 208, im Abstand L = 80 Promille der Wabeneintritt 209.

Optional befinden sich Aussparungen 214, 215 in den Kanten der ersten und zweiten Innenwand 206, 209. Am Eingang des mittleren Teilkanals 205 befinden sich an der Kante der ersten Innenwand 206 vier Aussparungen 214, die symmetrisch angeordnet sind. Am Eingang des inneren Teilkanals 208 sind es z. B. zwei Aussparungen 215 an der Kante der zweiten Innenwand 209. Auch diese Aussparungen sind symmetrisch angeordnet. Eine solche Aussparung weist z. B. eine Länge M = 170 Promille auf, während der Abstand zwischen den Punkten auf der Kante N = 300 Promille beträgt und einer Kreissehne entspricht.

Das Abgas strömt mit einer relativen Geschwindigkeit c1 = 1.47 durch die Zuleitung 201. Durch die Mischeinrichtung 200 strömt das Abgas-Reaktionsmittelgemisch mit einer relativen Geschwindigkeit c2 = 1. Es wird beim Eindringen in den Reaktor 210 etwas verlangsamt auf die Relativgeschwindigkeit c3 = 0.85.

Die Abmessungen A-N sind als Verhältnisangaben in Promille zu verstehen und können je nach gewünschter Kapazität der Mischeinrichtung mit einem entsprechenden Faktor multipliziert werden. So können z. B. mit einem Faktor 1 in einem konkreten Ausführungsbeispiel 1000 Promille gleichgesetzt werden mit 1000 mm. Es ist auch möglich, um 10 % von den angegebenen optimalen Masszahlen abzuweichen, ohne dass die erfindungsgemäss angestrebten Effekte verloren gehen.

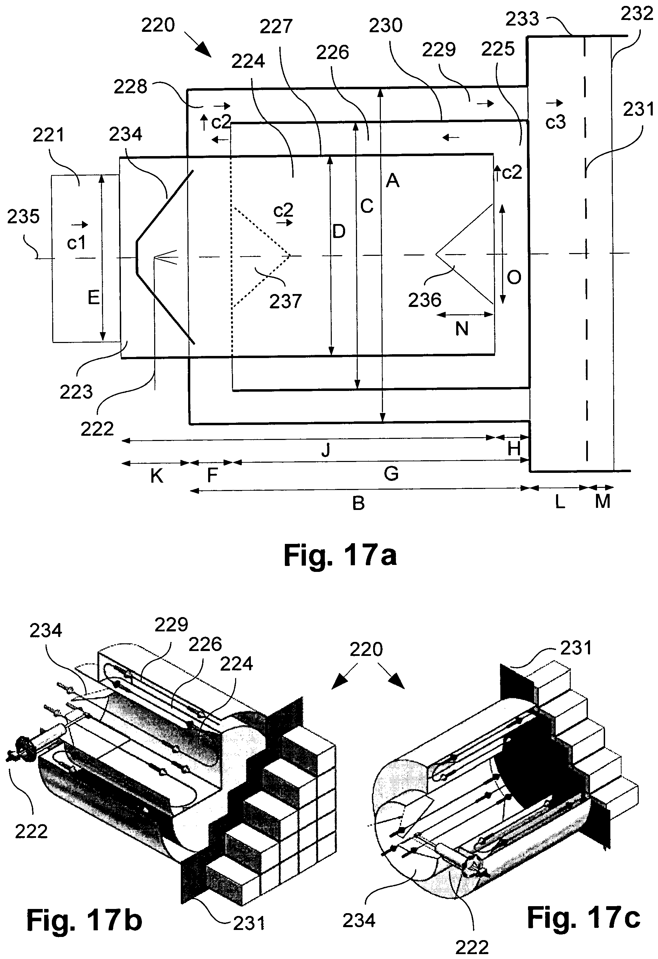

Fig. 17a-c zeigt eine konzentrisch aufgebaute Mischeinrichtung 220 im Querschnitt (Fig. 17a) und in zwei perspektivischen Ansichten (Fig. 17b,c). Es handelt sich dabei um ein konzentrisch aufgebautes Mischsystem mit Einzeleindüsung, das von innen nach aussen durchströmt wird.

Die Mischeinrichtung 220 wird vom Abgas von links nach rechts durchströmt. Das Abgas tritt durch die kreisrunde Zuleitung 221 in die Mischeinrichtung 220 ein und wird an der zentralen Eindüsstelle 222, die in einem Eindüs-Bereich 223 liegt, mit dem Reaktionsmittel in Form von Tröpfchen versetzt. Das Abgas-Reaktionsmittel-Gemisch strömt durch den zentralen inneren Teilkanal 224, der einen kreisrunden Querschnitt aufweist. Das Gemisch strömt von links nach rechts bis zur ersten Umlenkstelle 225. An der ersten Umlenkstelle 225 tritt das Abgas-Reaktionsmittel-Gemisch vom inneren Teilkanal 224 in den mittleren Teilkanal 226, dabei wird seine Strömungsrichtung um die Kante der ersten Innenwand 227m, die als Strömungsabrisskante ausgebildet ist, um 180° gewendet. So strömt das Abgas-Reaktionsmittel-Gemisch im mittleren Teilkanal 226 gegenläufig zur Strömungsrichtung im inneren Teilkanal 224, also von rechts nach links. Der mittlere Teilkanal 226 weist einen kreisringförmigen Querschnitt auf. Am Ende des mittleren Teilkanals 226 gelangt das Abgas-Reaktionsmittel-Gemisch zur zweiten Umlenkstelle 228, wo es vom mittleren Teilkanal 226 in den äusseren Teilkanal 229 tritt, dabei wird seine Strömungsrichtung um die Kante der zweite Innenwand 230, die ebenfalls als Strömungsabrisskante ausgebildet ist, um 180° gewendet, so dass es von links nach rechts strömt. Der äussere Teilkanal 229 entspricht im Querschnitt einem Kreisring. Am Ende des äusseren Teilkanals 229 verlässt das Abgas-Reaktionsmittel-Gemisch die Mischeinrichtung 220, es tritt durch das Lochblech 231 und strömt durch den Wabeneintritt 232 in den Bereich des Reaktors 233.

Zur Verbesserung der Durchmischung ist im Eindüs-Bereich 223 an der zentralen Eindüsstelle 222 zusätzlich ein Sprühtrichter 234 vorgesehen. Dabei handelt es sich z. B. um ein Blech, dass die Form eines Kegelstumpfs aufweist, wobei die Deckfläche in die Richtung des einströmenden Abgases zeigt.

Die Teilkanäle 224, 226, 229 sind konzentrisch um die Längsachse 235 aufgebaut. Die besten Mischungsgrade erhält man, wenn die Mischeinrichtung 220 einen Aussendurchmesser A aufweist, der der Länge B des äusseren Teilkanals 229 entspricht, z. B. A = B = 1000 Promille. Der Zylinder, der der zweiten Innenwand 230 entspricht und den mittleren Kanal 226 nach aussen begrenzt weist einen Durchmesser C = 816 Promille auf. Der zylinderförmige innere Teilkanal 224, definiert durch die erste Innenwand 227, hat einen Durchmesser D = 577 Promille. Das Abgas wird durch die kreisrunde Zuleitung 221 mit einem Durchmesser von E = 476 Promille in die Mischeinrichtung 220 geleitet.

Die Länge B des äusseren Teilkanals 229 definiert die Länge der Mischeinrichtung 220. Die zweite Umlenkstelle 228 hat eine Länge F = 102 Promille. Der gerade Teil des äusseren Teilkanals 229 hat eine Länge von G = 898 Promille. Die erste Umlenkstelle 225 hat eine Länge H = 102 Promille. Der innere Teilkanal 224 weist zusammen mit dem Eindüs-Bereich 223 eine Länge J = 1056 Promille auf. Dabei entfallen auf den Eindüs-Bereich 223 K = 200 Promille. An die Mischeinrichtung 220 schliesst sich ein Reaktor 233 an. In einem Abstand von L = 170 Promille befindet sich das Lochblech 231, im Abstand M = 80 Promille der Wabeneintritt 232.

Optional befinden sich Aussparungen 236, 237 in den Kanten der ersten und zweiten Innenwand 227, 230. Am Eingang des mittleren Teilkanals 226 befinden sich an der Kante der ersten Innenwand 227 zwei Aussparungen 236, die symmetrisch angeordnet sind. Am Eingang des äusseren Teilkanals 229 sind es z. B. vier Aussparungen 237 an der Kante der zweiten Innenwand 230. Auch diese Aussparungen sind symmetrisch angeordnet. Eine solche Aussparung weist z. B. eine Länge N = 170 Promille auf, während der Abstand zwischen den Punkten auf der Kante O = 300 Promille beträgt und einer Kreissehne entspricht.

Das Abgas bzw. das Abgas-Reaktionsmittelgemisch strömt mit den gleichen relativen Geschwindigkeiten durch das System wie durch das System 200. Es tritt mit einer relativen Geschwindigkeit c1 = 1.47 durch die Zuleitung 221. Durch die Mischeinrichtung 220 strömt das Abgas-Reaktionsmittelgemisch mit einer relativen Geschwindigkeit c2 = 1, und es tritt etwas verlangsamt in den Reaktor 233 mit der Relativgeschwindigkeit c3 = 0.85.

Auch die Abmessungen A-O an der Mischeinrichtung 220 sind als Verhältnisangaben zu verstehen und können je nach gewünschter Kapazität der Mischeinrichtung mit einem entsprechenden Faktor multipliziert werden. Bei einem Faktor 1 können z. B. 1000 Promille gleichgesetzt werden mit 1000 mm. Es ist auch möglich, um 10 % von den angegebenen optimalen Masszahlen abzuweichen, ohne dass die erfindungsgemäss angestrebten Effekte verloren gehen.

Die aufgeführten Mischeinrichtungen sind lediglich als Beispiele zu verstehen und stellen keine vollständige Auflistung der möglichen Varianten dar.

Durch die zweifache Umlenkung um 180° wird eine nahezu ideale Vermischung und falls notwendig eine ausreichende Verdampfung und Hydrolyse erreicht. Durch den Verzicht auf weitere Einbauten bilden sich keine Ablagerungen. Nach einem mit Biogas betriebenen Motor zur Stromerzeugung mit 640 kW Leistung wurde eine interne Mischstrecke im SCR-Reaktorgehäuse mit einem Durchmesser von 660 mm und einer Länge von 990 mm eingebaut und getestet. Die max. Abgasmenge betrug 3200 kg/h und die max. Abgastemperatur 480 °C. Zur Entstickung wurden max. 2.5 l/h AdBlue (32.5% HWL) mit einer Zweistoffdüse mit Druckluftunterstützung im Zentrum am Eintritt in den ersten Teilkanal dosiert. Der gemessene Umsatz im Reaktor entsprach dem Erwartungswert, d. h. es zeigten sich keine Abweichungen, die auf ungenügende Mischung zurückgeführt werden könnten. Bei der Inspektion nach mehrmonatigem Einsatz war die Mischeinrichtung und der Reaktor frei von jeglichen Ablagerungen. Die dafür früher geplante Mischstrecke mit einem Rohrmischer hätte einen Durchmesser von ca. 400mm und eine Länge mit den notwendigen Übergängen von min. 3 m gehabt. Sie wäre beim vorhandenen Bauraum nicht möglich gewesen.

Ein Sprühtrichter an einer Dosier- bzw. Eindüsstelle kann auch als Kegel ausgebildet sein, dessen Spitze in Richtung des einströmenden Abgasstroms ragt, und in dessen Bereich der offenen Grundfläche sich die Einsdüsstelle befindet. Alternativ kann es sich aber auch um ein gerades oder zu einem Kegel geformtes Gitter oder Lochblech handeln. Zusammenfassend ist festzustellen, dass die erfindungsgemässen Mischeinrichtungen eine verbesserte Vermischung der Abgase mit einem für die Entfernung der Stickoxide notwendigen Reaktionsmittel ermöglichen. Gleichzeitig können diese Mischeinrichtungen weitaus kleiner gestaltet werden, so dass ihr Einbau auch bei Anlagen mit begrenztem Platzangebot möglich ist. Die ohnehin verbesserte Durchmischung kann durch zusätzliche Einbauten noch weiter gesteigert werden.

## Patentansprüche

1. Mischeinrichtung zur Verwendung bei der katalytischen Entfernung von Stickoxiden aus einem Abgasstrom (7),
a) wobei in der Mischeinrichtung (10) ein gasförmiges oder flüssiges Reaktionsmittel im Abgasstrom (7) homogen verteilt wird, damit der Abgasstrom (7) danach einem Reaktor (11) zur katalytischen Entfernung von Stickoxiden nach dem SCR-Verfahren zugeführt werden kann,
b) wobei innerhalb der Mischeinrichtung (10) Umlenkstellen (8) mit jeweils einer Strömungsabrisskante vorgesehen sind, an denen der Abgasstrom (7) mindestens zweimal um jeweils 180° umgelenkt wird,
c) wobei die Mischeinrichtung (10) in ihrem Gesamt-Querschnitt in drei Teilkanäle (13, 14, 15) unterteilt ist, die über die Umlenkstellen (8) derart miteinander verbunden sind, dass sie eine Mischstrecke (25) bilden,
**dadurch gekennzeichnet, dass** die drei Teilkanäle (13, 14, 15) durch exzentrisch angeordnete Trennbleche (18, 19) begrenzt sind, dass die Mischeinrichtung (10) im Gesamt-Querschnitt einem Kreis mit Radius R entspricht und dass die Trennbleche (18, 19) zur Begrenzung der Teilkanäle (13, 14, 15) jeweils ein Kreisbogenprofil bilden, wobei ein Krümmungsradius r des Kreisbogenprofils dem Radius R des Gesamt-Querschnitts entspricht.

2. Mischeinrichtung nach Anspruch 1, **dadurch gekennzeichnet, dass** die drei Teilkanäle (13, 14, 15) gleich große Querschnitte aufweisen, und die Summe der Querschnitte der Teilkanäle dem Gesamt-Querschnitt der Mischeinrichtung (10) entspricht.

3. Mischeinrichtung nach Anspruch 1, **dadurch gekennzeichnet, dass** die drei Teilkanäle (13, 14, 15) und die Umlenkstellen zwischen den Teilkanälen einen konstanten Strömungsquerschnitt aufweisen, der einem Drittel des Gesamt-Querschnittes der Mischeinrichtung (10) entspricht.

4. Mischeinrichtung nach einem der Ansprüche 1 bis 3, **dadurch gekennzeichnet, dass** in wenigstens einem ersten Teilkanal (13) mindestens eine Dosierstelle (4) für ein flüssiges oder gasförmiges Reaktionsmittel angeordnet ist.

5. Mischeinrichtung nach einem der Ansprüche 1 bis 4, **dadurch gekennzeichnet, dass** in den Teilkanälen (13, 14, 15) der Mischeinrichtung (10) oder an den Umlenkstellen zusätzliche Leitelemente (31) oder statische Mischer (32) eingebaut sind.

6. Mischeinrichtung nach einem der Ansprüche 1 bis 5, **dadurch gekennzeichnet, dass** an den Umlenkstellen Aussparungen (30) an Trennblechen vorgesehen sind.

7. Mischeinrichtung nach einem der Ansprüche 1 bis 6, **dadurch gekennzeichnet, dass** ein erster Teilkanal im Bereich zwischen einer Dosierstelle und einer ersten Umlenkung einen konstanten Querschnitt aufweist.

8. Vorrichtung zur katalytischen Entfernung von Stickoxiden aus einem Abgasstrom, wobei in einer Mischeinrichtung (10) nach einem der Ansprüche 1 bis 7 ein gasförmiges oder flüssiges Reaktionsmittel im Abgasstrom (7) homogen verteilbar ist und der Abgasstrom (7) danach durch einen Reaktor (11) zur katalytischen Entfernung von Stickoxiden nach dem SCR-Verfahren führbar ist.

9. Vorrichtung nach Anspruch 8, **dadurch gekennzeichnet, dass** die Mischeinrichtung (10) an einer ausgangsseitigen Stirnseite (23), an der der Abgasstrom (7) austritt, einen Gesamt-Querschnitt aufweist, der gleich gross ist wie ein Gesamt-Querschnitt der eingangsseitigen Stirnseite (24) des nachfolgenden Reaktors.

10. Vorrichtung nach einem der Ansprüche 8 oder 9, **dadurch gekennzeichnet, dass** sich die Mischeinrichtung (10) und der nachfolgende Reaktor (11) in einem gemeinsamen Gehäuse befinden.

## Claims

1. Mixing device for use in the catalytic removal of nitrogen oxides from an exhaust gas flow (7),
a) wherein, in the mixing device (10), a gaseous or liquid reaction medium is homogeneously distributed in the exhaust gas flow (7) so that the exhaust gas flow (7) can then be fed to a reactor (11) for the catalytic removal of nitrogen oxides in accordance with an SCR process,
b) wherein deflection points (8) each having a flow separation edge are provided inside the mixing device, the exhaust gas flow (7) being deflected at least twice at said deflection points, in each case by 180°,
c) wherein the mixing device (10) is divided in its total cross-section into three sub-channels (13, 14, 15), which are connected to each other by means of the deflection points (8) in such a way that they form a mixing path (25),
**characterised in that** the three sub-channels (13, 14, 15) are delimited by eccentrically arranged partition plates (18, 19), **in that** the mixing device (10) in its total cross-section corresponds to a circle of radius R, and **in that** the partition plates (18, 19) each form a circular arc profile in order to delimit the sub-channels (13, 14, 15), wherein a radius of curvature r of the circular arc profile corresponds to the radius R of the total cross-section.

2. Mixing device according to claim 1, **characterised in that** the three sub-channels (13, 14, 15) have cross-sections of identical size, and the sum of the cross-sections of the sub-channels corresponds to the total cross-section of the mixing device (10).

3. Mixing device according to claim 1, **characterised in that** the three sub-channels (13, 14, 15) and the deflection points between the sub-channels have a constant flow cross-section, which corresponds to a third of the total cross-section of the mixing device (10).

4. Mixing device according to any one of claims 1 to 3, **characterised in that** at least one dispensing point (4) for a liquid or gaseous reaction medium is arranged in at least one first sub-channel (13).

5. Mixing device according to any one of claims 1 to 4, **characterised in that** additional guide elements (31) or static mixers (32) are installed in the sub-channels (13, 14, 15) of the mixing device (10) or at the deflection points.

6. Mixing device according to any one of claims 1 to 5, **characterised in that** recesses (30) on partition plates are provided at deflection plates.

7. Mixing device according to any one of claims 1 to 6, **characterised in that** a first sub-channel has a constant cross-section in the region between a dispensing point and a first deflection.

8. Apparatus for the catalytic removal of nitrogen oxides from an exhaust gas flow, wherein, in a mixing device (10) according to any one of claims 1 to 7, a gaseous or liquid reaction medium is configured to be homogeneously distributed in the exhaust gas flow (7), and the exhaust gas flow (7) is then guidable through a reactor (11) for the catalytic removal of nitrogen oxides in accordance with an SCR process.

9. Apparatus according to claim 8, **characterised in that** the mixing device (10), on an outlet-side end face (23), at which the exhaust gas flow (7) exits, has a total cross-section which is the same size as a total cross-section of the inlet-side end face (24) of the downstream reactor.

10. Apparatus according to either one of claims 8 or 9, **characterised in that** the mixing device (10) and the downstream reactor (11) are disposed in a common housing.

## Revendications

1. Dispositif de mélange pour l'utilisation lors de l'élimination catalytique des oxydes d'azote d'un flux de gaz d'échappement (7),
a) dans lequel, dans le dispositif de mélange, un réactif gazeux ou liquide est réparti de façon homogène dans le flux de gaz d'échappement (7) afin que le flux de gaz d'échappement (7) puisse ensuite être amené à un réacteur (11) pour l'élimination catalytique des oxydes d'azote d'après le procédé SCR,
b) dans lequel des points de déviation (8) avec respectivement un bord de séparation de l'écoulement, au niveau desquels le flux de gaz d'échappement (7) est dévié respectivement de 180° au moins deux fois, sont prévus à l'intérieur du dispositif de mélange (10),
c) dans lequel le dispositif de mélange (10) est subdivisé dans sa section transversale totale en trois sous-canaux (13, 14, 15), qui sont raccordés les uns aux autres par le biais des points de déviation (8) de telle manière qu'ils forment une distance de mélange (25),
**caractérisé en ce que** les trois sous-canaux (13, 14, 15) sont délimités par des tôles séparatrices (18, 19) disposées de manière excentrique, **en ce que** le dispositif de mélange (10) correspond, dans la section transversale totale, à un cercle de rayon R et **en ce que** les tôles séparatrices (18, 19) forment respectivement un profil d'arc pour délimiter les sous-canaux (13, 14, 15), dans lequel un rayon de courbure r du profil d'arc correspond au rayon R de la section transversale totale.

2. Dispositif de mélange selon la revendication 1, **caractérisé en ce que** les trois sous-canaux (13, 14, 15) présentent des sections transversales de même taille et la somme des sections transversales des sous-canaux correspond à la section transversale totale du dispositif de mélange (10).

3. Dispositif de mélange selon la revendication 1, **caractérisé en ce que** les trois sous-canaux (13, 14, 15) et les points de déviation entre les sous-canaux présentent une section transversale d'écoulement constante, qui correspond à un tiers de la section transversale totale du dispositif de mélange (10).

4. Dispositif de mélange selon l'une des revendications 1 à 3, **caractérisé en ce qu'**au moins une station de dosage (4) pour un réactif liquide ou gazeux est disposée dans au moins un premier sous-canal (13).

5. Dispositif de mélange selon l'une des revendications 1 à 4, **caractérisé en ce que** des éléments conducteurs (31) supplémentaires ou des mélangeurs statiques (32) sont intégrés dans les sous-canaux (13, 14, 15) du dispositif de mélange (10) ou au niveau des points de déviation.

6. Dispositif de mélange selon l'une des revendications 1 à 5, **caractérisé en ce que** des creux (30) sont prévus au niveau des tôles séparatrices au niveau des points de déviation.

7. Dispositif de mélange selon l'une des revendications 1 à 6, **caractérisé en ce qu'**un premier sous-canal présente une section transversale constante dans la zone entre une station de dosage et une première déviation.

8. Equipement pour l'élimination catalytique des oxydes d'azote d'un flux de gaz d'échappement, dans lequel un réactif gazeux ou liquide peut être réparti de façon homogène dans le flux de gaz d'échappement (7) dans un dispositif de mélange (10) selon l'une des revendications 1 à 7 et le flux de gaz d'échappement (7) peut être amené ensuite par un réacteur (11) à l'élimination catalytique des oxydes d'azote d'après le procédé SCR.

9. Equipement selon la revendication 8, **caractérisé en ce que** le dispositif de mélange (10) présente au niveau d'une face frontale côté sortie (23), d'où sort le flux de gaz d'échappement (7), une section transversale totale qui est aussi grande qu'une section transversale totale de la face frontale côté entrée (24) du réacteur suivant.

10. Equipement selon l'une des revendications 8 ou 9, **caractérisé en ce que** le dispositif de mélange (10) et le réacteur (11) suivant se trouvent dans un logement commun.
